# EUROPEAN PATENT APPLICATION

(11) **EP 2 642 739 A1**
(43) Date of publication of application: **25.09.2013**
(21) Application number: 13158092.0
(22) Date of filing: 07.03.2013
(51) Int. Cl.: H04N 1/00, H04N 1/40, H04N 1/56

(54) **Method for scanning hard copy originals**

(30) Priority: 22.03.2012 EP 12160721
(71) Applicant: Océ-Technologies B.V., 5914 CA Venlo (NL)
(72) Inventor: Janssen, Johannes H.M., 5941 JP Velden (NL); Mulder, Tim, 5731 CD Mierlo (NL)
(74) Representative: De Jong, Robbert Arij Jeroen

(57) **Abstract**

A method is disclosed for converting a hard copy original to a digital image comprising pixels by a scanner system having an image line sensor that delivers at predefined points of time either a grey line, which is a line of pixels wherein each pixel is characterised by a single value, or a colour line wherein each pixel is characterised by at least three values, and a transport system for transporting the hard copy original across the image line sensor, the scanner system having several modes of operation, each mode being associated with a predefined original type and each mode assembling either grey lines or colour lines for composing the digital image. The method comprises the step of determining an optimal mode of operation for converting the hard copy original by transporting a first part of the hard copy original across the image line sensor. Grey lines from the image line sensor are used in the determination, because this allows the hard copy original to be transported three times as fast across the image line sensor. Surprisingly it is still possible to discern originals with colour information from scanned originals with only black-and-white information.

## Description

### FIELD OF THE INVENTION

The invention relates to a method for converting a hard copy original to a digital image comprising pixels by a scanner system. The invention further relates to a scanner system that is configured to use this method for conversion.

### BACKGROUND OF THE INVENTION

The conversion of a hard copy original into a digital image, also known as a soft copy, is employed to bring analog data as registered on paper or other flat media into the digital domain, which is expanding at a high rate. For documents that have a physical size as commonly used in office environments, document scanners that facilitate further processing in directing the scanned data to a correct location, greatly enhance the productivity of the scanner. For other documents it is beneficial to associate a number of dedicated image processing steps with an original type, such as line drawings, maps, or photographic images to obtain an optimal digital representation of the scanned image. Furthermore the distinction of coloured and monochrome scan data is still important in order to obtain fast processing and limited use of memory.

Present day scanners are often equipped with a Charge Coupled Device (CCD), a white light source that illuminates a hard copy original and an imaging element that maps the hard copy original to the CCD. The CCD has three lines of light sensitive elements, each line provided with a colour filter, usually red, green, and blue, to discriminate the light reflected by the hard copy original in different wavelength ranges, generating three values representative of a colour of a part of the original that is designated as a pixel. By transporting the hard copy original across the sensor and assembling the signals from the elements a digital image is composed wherein each pixel has a colour value that is characterised by three components. In U.S. Patent 7,969,626 a highly productive method is described to obtain a grey scale digital image from this kind of scanner using a three times higher transporting velocity of the original across the line that is mapped to the CCD.

In another configuration a scanner comprises a Contact Imaging Sensor (CIS) consisting of a linear array of detectors, covered by a focusing lens and flanked by red, green, and blue Light Emitting Diodes (LEDs) for illumination. A hard copy original is transported across the CIS to obtain a digital image. By sequentially activating the various coloured LEDs, the intensity signals from the CIS may be assembled into lines of pixels with a colour value, each colour value having three components. Increasing the frequency of activation of the various LEDs, or activating only one type of LED, results in intensity signals in which the three components have the same value, which means that effectively a monochrome, or a grey scale, digital image is obtained. The transporting velocity defines a resolution of the digital image in a transport direction and may, for the same resolution, be three times higher for a monochrome digital image.

In order to obtain an optimal digital image from a scanner, often a pre-scan is employed, in which the hard copy original is partly or completely transported across the line sensor. From the scan lines in the pre-scan, an optimal dynamic range may be determined, or a type of original may be derived. Each type of original, such as line drawings or photographic images, colour or black-and-white, is associated with a distinct mode of operation of the scanner. The pre-scan lines may also be buffered in a buffer memory, which may be an electronic memory or a disk kind of memory, for later use. In that case the pre-scan lines may serve as scan lines that are representative for at least a part of the hard copy original. E.g. it may be advantageous to determine if the hard copy original contains coloured areas, in which case a colour digital image is required, whereas otherwise a grey scale digital image can be used. In U.S. Patent 7,307,758 a method is described to compose a histogram from colour lines. Using this histogram a discrimination between coloured originals, grey scale photograhic originals and black-and-white character originals may be made. For each type of orginal a different image processing is applied and for each type of original a different file type may be used to save the digital image.

A sufficient length of the hard copy original needs to be used in a pre-scan to determine the original type with satisfactory probability. However, the productivity of a scanner suffers from using colour lines in the pre-scan, especially when the majority of the originals are grey scale images. Therefore there is a problem in increasing the productivity of a scanner with automatic original type recognition.

An object of the present invention is to obviate the above problem.

### SUMMARY OF THE INVENTION

According to the present invention, a method for converting a hard copy original to a digital image comprising pixels by a scanner system having an image line sensor that delivers at predefined points of time either a grey line, which is a line of pixels wherein each pixel is characterised by a single value, or a colour line wherein each pixel is characterised by at least three values, and a transport system for transporting the hard copy original across the image line sensor, the scanner system having several modes of operation, each mode being associated with a predefined original type and each mode assembling either grey lines or colour lines for composing the digital image, the method comprising a step of determining an optimal mode of operation for converting the hard copy original by transporting a first part of the hard copy original across the image line sensor, comprises the feature that grey lines from the image line sensor are used in the determination. Contrary to the expectation, it is possible, for most originals that are met in practice, to derive whether or not colour information is available in a hard copy, by analysing the distribution of grey values in a pre-scan. The use of grey lines has the advantage that, in a limited time frame that is available for determining the original type, a sufficient part of the hard copy original is included in a pre-scan, because a high transport velocity of the hard copy is applied.

In a further embodiment the grey lines of the said first part of the hard copy original are saved in a buffer memory. If it is established that the optimal mode of operation assembles grey lines from the image line sensor, the conversion starts with the grey lines that have been saved in the buffer memory and the transportation of the hard copy original continues without interruption after finishing the transportation of said first part. Thus there is no difference between the said first part of the original and a further part and for both parts the hard copy original is transported with a high velocity that is appropriate for this kind of original. An alternative for even higher productivity is to start processing the grey lines with a standard conversion method, that is associated with a frequently occurring original type. If, after establishment of an optimal mode of operation, it appears that a different conversion method is preferred, the already processed data may be overwritten by new processed data according to the optimal conversion method. Otherwise the already processed data can be used to compose a digital image.

In a further embodiment the first part of the hard copy original is transported again across the image line sensor to obtain colour lines from the said first part of the hard copy original, if the optimal mode of operation assembles colour lines from the image line sensor. Since the pre-scan lines are grey lines that are scanned at high velocity, colour lines need to be assembled from the start of the hard copy original which may be transported back to be transported again across the image line sensor. As an alternative, the hard copy original may be transported to the end of the original with high velocity to determine the original type using grey lines and transported backwards with lower velocity only if colour lines need to be assembled.

In a further embodiment the step of determining an optimal mode of operation comprises the step of determining a value for a number of characterizing parameters, that characterize the distribution of pixel values in said first part of the hard copy original. Such characterizing parameters include the position and width of a background peak in a histogram of grey values, the presence of a peak that relates to weak information, which is information with a grey value just below a background value, the presence of lines parallel to one of the edges of the medium, the uniformity of grey values etc. The combination of these characteristics lead to a most probable original type with an associated processing method.

In a further embodiment a probability is determined for each predefined original type to fit the hard copy original. A probability is a weighted average of the characterizing parameters, wherein the weight factors vary with the predefined original type. As a result, the original type with the highest probability will be selected for determining the optimal mode of operation of the scanner.

The invention further encompasses a scanner system comprising an image line sensor that delivers at predefined points of time either a grey line, which is a line of pixels wherein each pixel is characterised by a single value, or a colour line wherein each pixel is characterised by at least three values, a transport system for transporting the hard copy original across the image line sensor, and a control unit configured to perform one of the described methods.

### BRIEF DESCRIPTION OF THE DRAWINGS

Hereinafter the present invention is further elucidated with references to the appended drawings showing non-limiting embodiments and wherein:
Fig. 1 is a scanner configuration for executing the invented method;
Fig. 2 is a flow diagram of an embodiment of the present invention;
Fig. 3 is an example of a hard copy original for which the present invention is applied;
Fig. 4 is a histogram of a part of a hard copy original; and
Fig. 5 is a flow diagram for a determination of an original type.

### DETAILED DESCRIPTION OF EMBODIMENTS

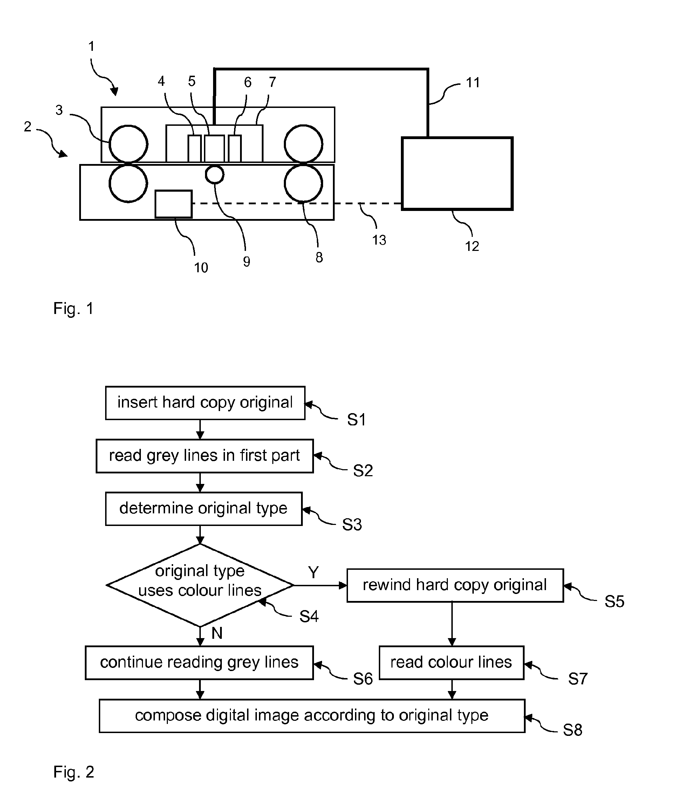

Fig. 1 shows a wide format scanner 1, which is configured to convert hard copy originals having a width of about 20 cm up to about 95 cm and an arbitrary length. These dimensions are in no way a limitation for the invented method. A hard copy original is inserted in the scanner at 2, where the input rollers 3 transport it into the scanner. Inside the scanner a scanner module 7 comprises light sources 4 and 6, that illuminate the original repetitively from two sides with red, green and blue light in a fixed order. It further comprises a Contact Image Sensor (CIS) array 5, that is sensitive to each of these light types and passes signals that are representative for the optical density of the part of the original that is in the field of the sensor, through a data line 11 to an image controller 12. Depending on the repetition frequency of the light sources relative to the frequency reading the sensor signals, the signals represent grey or colour information. The sensors are calibrated using calibration roller 9 that is positioned in the field of the CIS array 5. Output rollers 8 transport the hard copy original out of the scanner. The scanner comprises a scanner controller 10 that controls the speed and rotation direction of the rollers 3, 8 and 9 and the frequency of the light sources 4 and 6. The frequency of the CIS array is fixed. The scanner controller is configured to make the scanner operate in two modes: one for generating grey image lines and one for generating colour image lines. The image controller 12 indicates by a control line 13 whether the scanner should operate in the one or the other mode. In the grey mode the transport speed of the hard copy original is three times higher than in the colour mode. In the present embodiment, the scanner transports the original with a speed of about 3 m/min. when reading grey lines, whereas colour lines are read from the scanner using a transport speed of about 1 m/min. These scan speeds result in both cases in the same resolution in transport direction. The image controller 12 assembles the image lines and converts them into a digital image according to an appropriate method. According to the invention, the image controller is configured to determine an original type from grey lines that are received from the scanner module 7. The scanner 1 and image controller 12 may be generating image data that are applied in a printing device for making a hard copy of the scanned original. Another possibility is to save the generated data in a file for later use.

In Fig. 2 the present invention is embodied in a method for scanning a hard copy original. An image processing method is associated with an original type that is selected from a list of predefined original types: Black/White Line-Text (BWLT), Colour Line-Text (COLT), Photographic (PHG), Maps (MP), Dark Original (DO), Blue Print (BP) and Folded Original (FO). The invented method selects from this list an original type that is most appropriate for the scanned original. First, in step S1, a hard copy original is inserted into the scanner. A predefined length of the original is transported across the image sensor of the scanner in step S2 to read a number of grey lines from a first part of the original. For this transport a speed is applied, that is associated with the reading of grey lines. It may have various values depending on the characteristic properties of the scanner hardware. In step S3 an original type is determined based on the grey values of the pixels. Although only one number, a grey value, for each pixel is available, it turns out to be possible to discern whether the hardcopy original comprises a substantial amount of colour pixels. In that case the hardcopy original may be designated as a colour original. If for the established original type colour lines are needed, which is determined in step S4, the hard copy original is rewinded in step S5 and the original is transported across the image sensor of the scanner with a lower speed, which is associated with the reading of colour lines, in step S7. If in step S4 it is determined that no colour lines are needed, the scanner continues, in step S6, to read grey lines for the remainder part of the original. All the scanner data are processed according to the associated image processing method, composing a digital image in step S8.

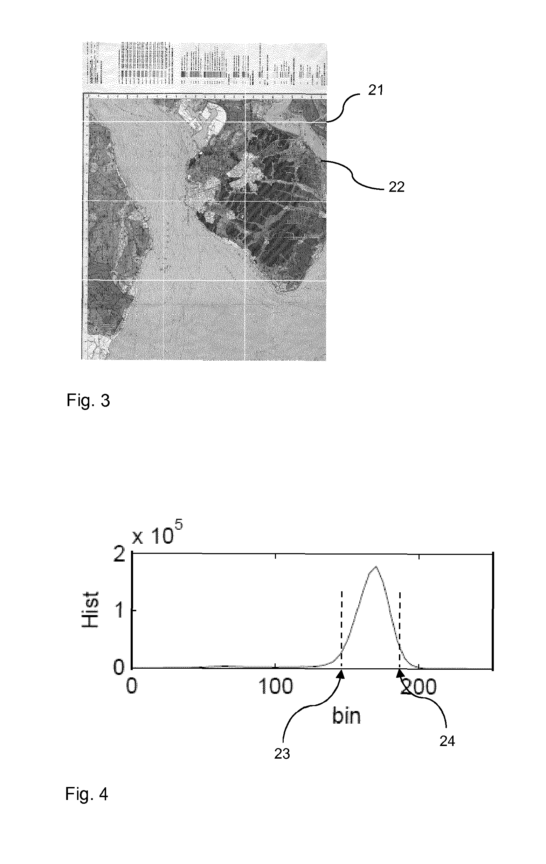

In Fig. 3 an example of an original that may be scanned is shown. White lines 21 are drawn to indicate a division in tiles 22. For each tile belonging to a first part of the original, a separate determination of the original type is made. From the set of determined original types for each tile, an original type for the complete original is derived, e.g. by selecting the most often occurring original type. If the predefined length defining the first part that is used to determine an original type, is small relative to the length of the original, the determination may become sensitive of the side which is scanned first. Therefore it is beneficial to apply a sufficient length for the first part. The division in tiles helps to make a better discrimination between various distributions of grey values. These distributions are expressed in histograms, from which a number of characterizing parameters, or image properties, are derived for a determination of an original type.

In Fig. 4 a histogram is shown of a grey value distribution for an characteristic original. The grey values are represented by an eight bit number ranging from 0 to 255. Each discrete value is placed in a separate bin as shown on the horizontal axis. In this embodiment a higher grey value indicates a lighter grey pixel, but the opposite is equally well applicable. For small originals it may be advantageous to use a bin for each pair of consecutive grey values. The number of pixels having a particular grey value is shown on the vertical axis. One of the image properties that is derived from this distribution is the position and width of the background. This background property is defined as the range of grey values wherein 90% of the pixels have their value. In Fig. 4 the lower range limit 23 and the upper range limit 24 of the range are indicated. The position of the background peak is the average value of the two range limits, the width of the background is the difference between them. Both properties are normalized to bring them into a range of -1 to 1 in order to be able to include the properties in a score calculation. E.g. the background position property, Bp, is normalized by the following function:

| | |
|---|---|
| Bp ≤ 50 : | NBp = -1 |
| 50 ≤ Bp ≤ 200 : | NBp = (Bp-50)/75 -1 |
| Bp > 200 : | NBp = 1 |

wherein NBp is the normalized background position property. The background width property, Bw, is normalized by:

| | |
|---|---|
| Bw ≤ 50 : | NBw = 1 - exp[-abs(Bw-50) / 5] |
| Bw > 50 : | NBw = -1 + exp[-abs(Bw-50) / 5] |

The constants of these normalisation functions have been obtained without undue experimentation and may also have different values. It is noted that for every distribution of grey values these properties may be evaluated, but the interpretation as background peak is dependent on their actual value. For an original image containing lines and text, the background position, Bp, will characteristically be between 190 and 220, whereas the background width, Bw, is around 10 to 20. For an original with a photographic image their values depend completely on the content of the image.

Another property that is derived from a histogram analysis is the ratio of the dark and light information, which is the ratio between the amount of pixels having a grey value lower than the lower limit of the background range and the amount of pixels having a grey value higher than the upper limit of the background range. This property is used to discern a Dark Original from a Blue Print. A further characterising property is the number of peaks that occur below the lower limit of the background range. This property is used to discriminate the use of colour in the original.

Other properties do not use a histogram, but indicate a relation of pixels with their environment. Such a property is the orthogonality of lines, which are defined as lines parallel to the edges of the original. Another example is the property plane egality, which is obtained by repeatedly low-pass filtering of the tiles of an original image and comparing the grey values in the filtered image with the original grey values. All these properties are normalized into a range of -1 to 1.

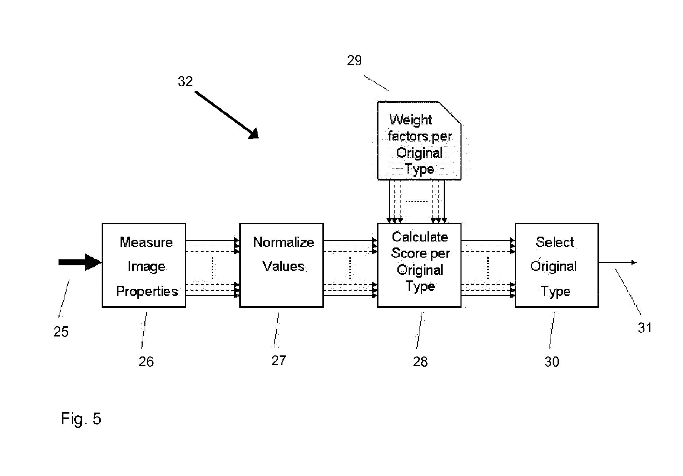

In Fig. 5 the flow of the data in step S3 is indicated in processing module 32. The grey value image data of the scanned original enter the original type determination module at 25, comprising a number of elements. In element 26 a number of image properties is determined from these data, in a way as outlined above. The determined values are passed to the normalisation element 27 from which a value between -1 and 1 is passed to element 28. In this element a score for each original type is determined using the weight factors per original type as saved in element 29. An example of these weight factors is given in Table 1. In element 30 the original type with the highest score is selected as the most probable original type which is passed to the image controller 12 through the data line 31. Using the determined original type an image processing method is selected to convert the scanned data from the hardcopy original into a digital image.

**Table 1. Weight factors of different original types for determining a score for each original type in dependence of normalized measured image properties.**

| image property / original type | BWLT | COLT | PHG | MP | DO | BP | FO |
|---|---|---|---|---|---|---|---|
| WeakInfo | 2 | -1 | 0 | 0 | 0 | 0 | -2 |
| Background position | 1 | 1 | 0 | 0 | -1 | -1 | 1 |
| Background width | 3 | 3 | -2 | -2 | 3 | 3 | 3 |
| Dark /Light ratio | 0 | 0 | 0 | 0 | 2 | -2 | 0 |
| Number of peaks | -0.5 | +0.5 | 0 | 0 | 0 | 0 | -0.5 |
| Orthogonality | 1 | 1 | -2 | 1 | 1 | 1 | 1 |
| Plane egality | 0 | 0 | 1 | -1 | 0 | 0 | 0 |

The weight factors determine a balance between a productive scanner, in which as many as possible hardcopy originals are associated with a Black and White original type, and a high quality scanner, in which as many as possible hardcopy originals are associated with a colour original type. In a further embodiment it is possible to provide alternative weight factors to shift the balance between these two scanner types. A user may even determine by a setting on the user interface how he prefers his originals to be interpreted. Using two different tables of weight factors, a gradual transition between two extremes is possible by interpolating the two weight factors for each image property / original type combination.

The above disclosure is intended as merely exemplary, and not to limit the scope of the invention, which is to be determined by reference to the following claims.

## Claims

1. A method for converting a hard copy original to a digital image comprising pixels by a scanner system having an image line sensor that delivers at predefined points of time either a grey line, which is a line of pixels wherein each pixel is **characterised by** a single value, or a colour line wherein each pixel is **characterised by** at least three values, and a transport system for transporting the hard copy original across the image line sensor, the scanner system having several modes of operation, each mode being associated with a predefined original type and each mode assembling either grey lines or colour lines for composing the digital image, the method comprising the step of determining an optimal mode of operation (S3) for converting the hard copy original by transporting a first part of the hard copy original across the image line sensor (S2), **characterised in that** grey lines from the image line sensor are used in the determination.

2. The method according to claim 1, wherein the grey lines of the said first part of the hard copy original are saved in a buffer memory and, if the optimal mode of operation assembles grey lines from the image line sensor, the conversion starts with the grey lines that have been saved in the buffer memory and the transportation of the hard copy original continues without interruption after finishing the transportation of said first part (S6).

3. The method according to claim 1, wherein, if the optimal mode of operation is configured for assembling colour lines from the image line sensor, the first part of the hard copy original is transported again across the image line sensor to obtain colour lines from the said first part of the hard copy original and subsequently the rest of the hard copy original (S7).

4. The method according to claim 1, wherein the step of determining an optimal mode of operation comprises the step of determining a value for a number of characterizing parameters, that characterize the distribution of pixel values in said first part of the hard copy original.

5. The method according to claim 4, wherein a probability is determined for each predefined original type to fit the hard copy original.

6. A scanner system (1) comprising an image line sensor (7) that delivers at predefined points of time either a grey line, which is a line of pixels wherein each pixel is **characterised by** a single value, or a colour line wherein each pixel is **characterised by** at least three values, a transport system (3, 8) for transporting the hard copy original across the image line sensor (7), and a control unit (12) configured to perform one of the methods in claims 1 to 5.
